# EUROPEAN PATENT APPLICATION

(11) **EP 4 773 379 A1**
(43) Date of publication of application: **08.07.2026**
(21) Application number: 24859218.0
(22) Date of filing: 18.07.2024
(51) Int. Cl.: H01M 50/289, H01M 50/271, H01M 50/291

(54) **ELECTRIC POWER SUPPLY DEVICE**

(30) Priority: 28.08.2023 JP 2023137765
(71) Applicant: Panasonic Intellectual Property Management Co., Ltd., Kadoma-shi, Osaka 571-0057 (JP)
(72) Inventor: MIURA Takumu, kadoma-shi, Osaka 571-0057 (JP)
(74) Representative: Eisenführ Speiser
(86) International application number: PCT/JP2024/025858
(87) International publication number: WO 2025/047174

(57) **Abstract**

A power supply device includes battery blocks each including secondary battery cells, an outer case accommodating the battery blocks therein such that the battery blocks are arranged side by side, and a fixture fixing the battery blocks to the outer case. The battery blocks arranged side by side constitute a battery assembly. The fixture includes a first fixing part and second fixing parts. The first fixing part is disposed at a middle of the battery assembly and over adjacent battery blocks among the battery blocks. Each second fixing part presses a corresponding one of the battery blocks against the outer case to hold the battery blocks. Each second fixing part includes a portion fixed to the first fixing part and another portion fixed to the outer case.

## Description

### TECHNICAL FIELD

The present disclosure relates to a power supply device.

### BACKGROUND ART

A power supply device including secondary battery cells connected in series or parallel to one another is used in stationary energy storage applications, as a power supply device for home-use, business-use, and factory-use and a backup power supply for servers, or as a power supply for powering vehicles, such as hybrid vehicles, electric vehicles, construction vehicles, electric scooters, and electric carts. In these power supply devices, battery blocks each including secondary battery cells connected in series or parallel to one another are often connected to one another and accommodated in an outer case.

In light of recent social demands for reducing environmental impact and realizing a sustainable society, products that consider resource recycling, reuse, and reduction have been required. Accordingly, power supply devices are also required to be reusable for multiple purposes.

However, conventional power supply devices merely have structures suitable for the reuse. For example, in order to reuse a backup power supply for servers as a storage power supply for other purposes, it is necessary to prepare a dedicated fixing part each time due to different structures for fixing battery blocks caused by a difference in specifications for the backup power supply for servers and the storage power supply. Even when only some of the battery blocks need to be replaced, all battery blocks need to be removed once, resulting in poor workability.

### CITATION LIST

### Patent Literature

PTL 1: Japanese Patent Laid-Open Publication No. 2017-224627

### SUMMARY OF INVENTION

A power supply device according to an aspect of the present disclosure includes a plurality of battery blocks, each of the plurality of battery blocks including a plurality of secondary battery cells; an outer case accommodating the plurality of battery blocks therein such that the plurality of battery blocks are arranged side by side; and a fixture fixing the plurality of battery blocks to the outer case. The plurality of battery blocks arranged side by side constitute a battery assembly. Each fixture includes a first fixing part and a plurality of second fixing parts. The first fixing part is disposed at a middle of the battery assembly and over adjacent battery blocks among the plurality of battery blocks. Each of the plurality of second fixing parts presses a corresponding one the plurality of battery blocks against the outer case to hold the plurality of battery blocks, the each of the plurality of second fixing parts including a portion fixed to the first fixing part and another portion fixed to the outer case.

In the power supply device according to the aspect, the fixture for fixing the battery assembly to the outer case is divided into the first fixing part disposed across the battery blocks and the second fixing parts that fix the battery blocks by pressing each battery block. Thus, a battery block having various shapes may be fixed to a common outer case by preparing a second fixing part according to the shape of the battery block.

### BRIEF DESCRIPTION OF DRAWINGS

FIG. 1 is a perspective view of a power supply device according to Exemplary Embodiment 1.
FIG. 2 is an exploded perspective view of the power supply device shown in FIG. 1 for illustrating a state that an upper case is removed from the power supply device.
FIG. 3 is an exploded perspective view of the power supply device shown in FIG. 2 for illustrating a state that an end plate is removed from the power supply device.
FIG. 4 is an exploded perspective view of the power supply device shown in FIG. 3 for illustrating a state that a first fixing part is removed from the power supply device.
FIG. 5 is an exploded perspective view of the power supply device shown in FIG. 4 for illustrating a state that a second fixing part and a battery block on a front side are removed from the power supply device.
FIG. 6 is an exploded perspective view of the power supply device shown in FIG. 1 viewed diagonally from below.
FIG. 7 is an enlarged horizontal-sectional view of a key part of the power supply device along line VII-VII shown in FIG. 1.
FIG. 8 is an enlarged vertical-sectional view of a key part of the power supply device along line VIII-VIII shown in FIG. 1.
FIG. 9 is a magnified vertical sectional view of a key part of the power supply device along line IX-IX shown in FIG. 1.
FIG. 10 is a sectional view of the power supply device along line X-X shown in FIG. 1.
FIG. 11 is a perspective view of the first fixing part of the power supply device according to Embodiment 1.
FIG. 12 is a perspective view of the first fixing part shown in FIG. 11 viewed diagonally from below.
FIG. 13A is a perspective view of the second fixing part of the power supply device according to Embodiment 1.
FIG. 13B is a perspective view of the second fixing part shown in FIG. 13A viewed diagonally from below.
FIG. 13C is a sectional view of the second fixing part shown in FIG. 13A.
FIG. 14 is an exploded perspective view of the power supply device shown in FIG. 1 for illustrating a state an upper case and one end plate are removed from the power supply device.
FIG. 15 is an exploded perspective view of the power supply device shown in FIG. 14 for illustrating a state that a screw for fixing the second fixing part fixing one battery block and the first fixing part is removed in a battery assembly of the power supply device, and a wire harness removed.
FIG. 16 is an exploded perspective view of the power supply device shown in FIG. 14 for illustrating a state that the second fixing part is removed from the power supply device.
FIG. 17 is an exploded perspective view of the power supply device shown in FIG. 16 for illustrating a state that the one battery block is removed from the power supply device.
FIG. 18 is an exploded perspective view of a power supply device according to Exemplary Embodiment 2.
FIG. 19A is a perspective view of a second fixing part of the power supply device shown in FIG. 18.
FIG. 19B is a perspective view of the second fixing part shown in FIG. 19A viewed diagonally from below.
FIG. 19C is a sectional view of the second fixing part shown in FIG. 19A.
FIG. 20 is an exploded perspective view of the power supply device in FIG. 18.
FIG. 21A is a perspective view of a second fixing part of a power supply device according to Modification 1.
FIG. 21B is a perspective view of the second fixing part shown in FIG. 21A viewed diagonally from below.
FIG. 21C is a sectional view of the second fixing part shown in FIG. 21A.
FIG. 22A is a perspective view of a second fixing part of a power supply device according to Modification 2.
FIG. 22B is a perspective view of the second fixing part shown in FIG. 22A viewed diagonally from below.
FIG. 22C is a sectional view of the second fixing part shown in FIG. 22A.
FIG. 23A is a perspective view of a second fixing part of a power supply device according to Modification 3.
FIG. 23B is a perspective view of the second fixing part shown in FIG. 23A viewed diagonally from below.
FIG. 23C is a sectional view of the second fixing part shown in FIG. 23A.

### DESCRIPTION OF EMBODIMENT

Aspects of the present disclosure may be specified by structures or characteristics described below.

In a power supply device according to another aspect of the present disclosure, the each of the plurality of second fixing parts has a cross section with a squared U-shape. The each of the plurality of second fixing parts includes a first surface, a pair of second surfaces extending bendingly from both sides of the first surface, and a pair of third surfaces extending bendingly from respective sides of the pair of second surfaces opposite to the first surface. The first surface of the each of the plurality of second fixing parts is fixed to the first fixing part. The pair of third surfaces of the each of the plurality of second fixing parts are fixed to the outer case such that the first surface and the pair of second surfaces of the each of the plurality of second fixing parts cover the each of the plurality of battery blocks. In this structure, the battery blocks are pressed against the outer case and fixed to the outer case while the second fixing parts cover the battery blocks. To disassemble the battery blocks from the outer case, only an applicable second fixing part is disassembled to separate a particular battery block without disassembling the entire battery blocks, and other second fixing parts can be kept as they are.

In a power supply device according to still another aspect of the present disclosure, The outer case includes a lower case, an upper case closing an upper surface of the lower case, and an end plate closing at least one of a pair of end surfaces of the outer case surrounded by the lower case and the upper case. The first fixing part is fixed to the upper case. The plurality of second fixing parts are fixed to the lower case. In this structure, in order to remove a particular battery block from the outer case, the upper case and the end plate are disassembled and the second fixing part of the particular battery block is disassembled to easily pull out the particular battery block from the outer case.

In a power supply device according to still another aspect of the present disclosure, the third surfaces of the each of the plurality of second fixing parts have third-surface fixing holes opening therein, respectively. The outer case has case-fixing holes formed therein for fixing the third-surface fixing holes of the each of the pair of third surfaces. One third-surface fixing hole of one second fixing part fixing one battery block and another third-surface fixing hole of another second fixing part fixing another battery block adjacent to the one battery block face each other, overlap each other, and are fixed to one of the case-fixing holes. In this structure, the third surfaces may overlap and is jointly screwed to a common case-fixing hole. The fixing work of the adjacent battery blocks is shared for labor saving. In addition, this structure contributes to cost reduction by reducing the number of components.

In a power supply device according to still another aspect of the present disclosure, the each of the plurality of second fixing parts includes a protrusion protruding raised stepwise on the first surface. The protrusion has a third-surface fixing hole therein screwed with the first fixing part. In this structure, a height of the protrusion is adjusted according to a height of the battery block to be pressed, thereby allowing the battery blocks with different heights to be fixed to the first fixing part while a height difference is adjusted by the protrusion. Thus, a common outer case and a common first fixing part can be used for accommodating different battery blocks.

A power supply device according to still another aspect of the present disclosure further includes a tray provided opposite to a side where the first fixing part and between the each of the plurality of battery blocks and the outer case. The tray has tray-fixing holes provided therein at least at both ends of the tray in a longitudinal direction so as to fix the tray to the outer case. In this structure, the battery block can be fixed to the outer case via the tray, and no hole needs to be formed in the battery block to fix the battery block to the outer case.

In a power supply device according to still another aspect of the present disclosure, the first fixing part and the plurality of second fixing parts do not have a structure fixed directly to any one of the plurality of battery blocks. In this structure, the battery block is pressed to be fixed without providing a structure to directly fix the battery block to the fixture, and thus battery blocks with different shapes can be fixed. Accordingly, the structure is useful for reusing the battery blocks. In particular, the structure is effective for reuse and recycling of the battery blocks. However, the structure is not limited to power supply devices for reuse and recycling.

In a power supply device according to still another aspect of the present disclosure, the plurality of battery blocks are recycled battery blocks.

A solution to a problem according to one aspect of the present disclosure is to offer a power supply device in which the battery blocks can be easily fixed or disassembled for the reuse. A solution to a problem according to another aspect is to offer a novel power supply device, battery block, fixing structure, or their manufacturing method. However, these problems do not preclude the existence of other problems. Still more, one aspect of the present disclosure does not necessarily solve all the problems. Furthermore, other problems may be extracted from the description, drawings, claims, and the like.

Hereinafter exemplary embodiments of the present disclosure will be described with reference to the drawings. Note that the exemplary embodiments described below are illustrative for describing a technical concept of the present disclosure, and thus the present disclosure is not limited thereto. Still more, parts and materials described in the appended claims are not limited in any way to parts and materials described in the exemplary embodiments. In particular, unless otherwise specified, dimensions, materials, shapes, and relative positions of components described in the exemplary embodiments are simply illustrative and not intended to restrict the scope of the present disclosure. The sizes and positional relationships indicated in the drawings may be exaggerated to clarify the description. Still more, the same names and reference marks denote the same or identical parts and materials, and their detailed description may be omitted as appropriate. Furthermore, each element of the present disclosure may be configured such that multiple elements are combined into a single component, allowing one component to serve multiple functions, or conversely, the function of one component may be divided and implemented by multiple components.

The power supply device of the present disclosure is applicable to a backup power supply for servers and a power supply device for home, office, and factory use in stationary energy storage applications, a drive power supply for mobile objects such as electric carts, electric scooters, and power-assisted bicycles, a power supply for portable electric apparatuses such as wireless devices, electric cleaners, and electric tools, and a drive power supply for vehicles such as hybrid vehicles and electric vehicles. The exemplary embodiments of the present disclosure below describe a power supply device for power storage.

### Exemplary Embodiment 1

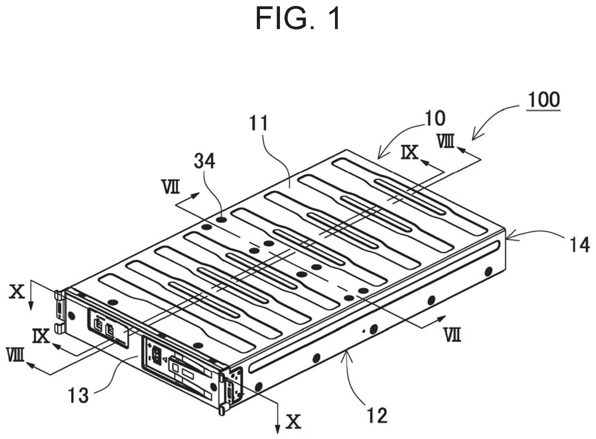

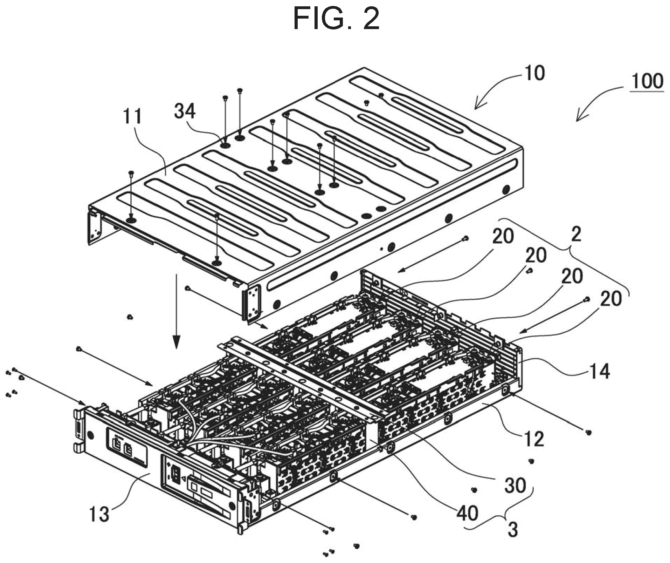

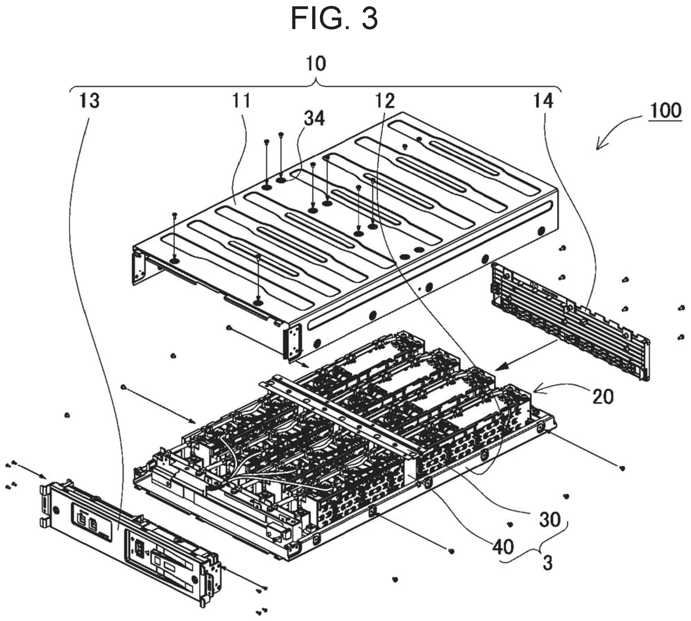

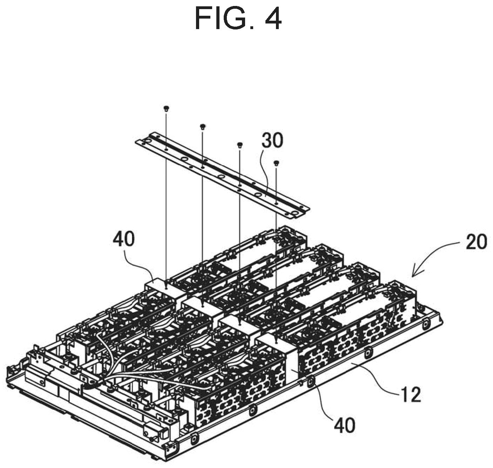

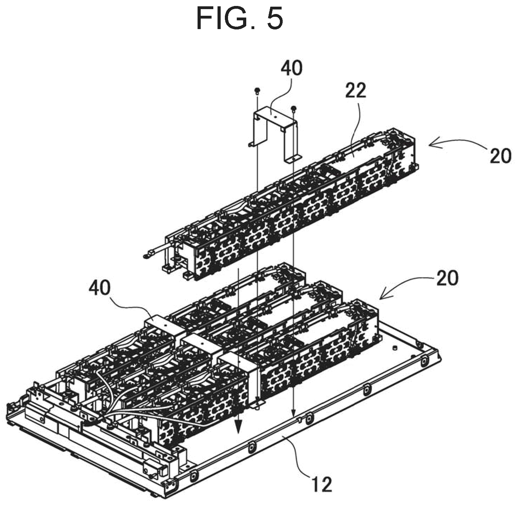

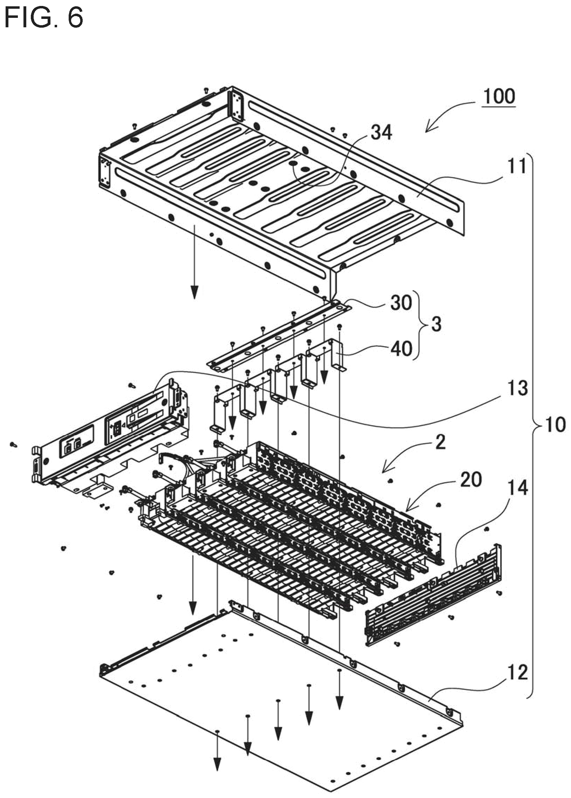

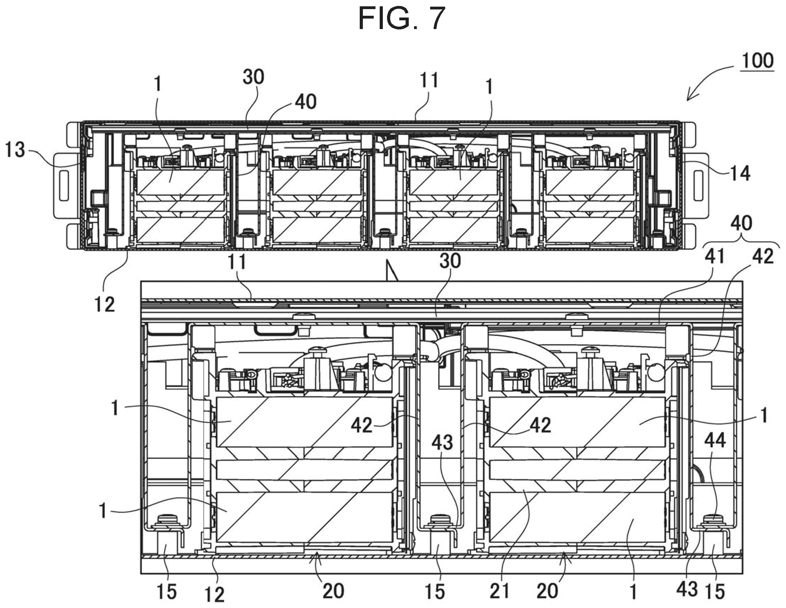

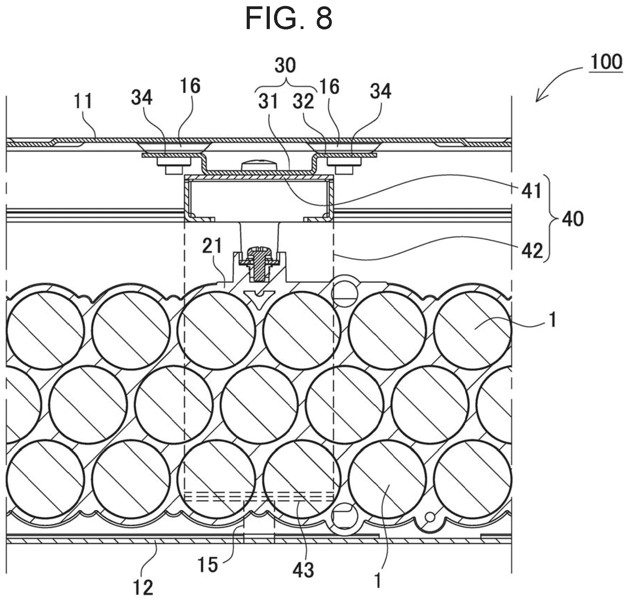

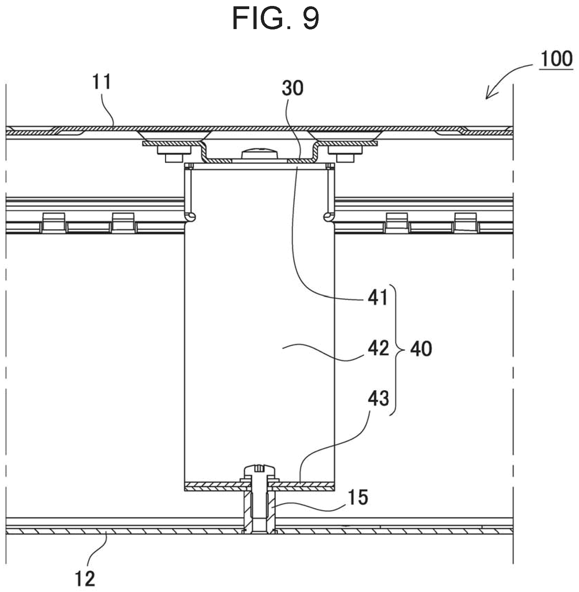

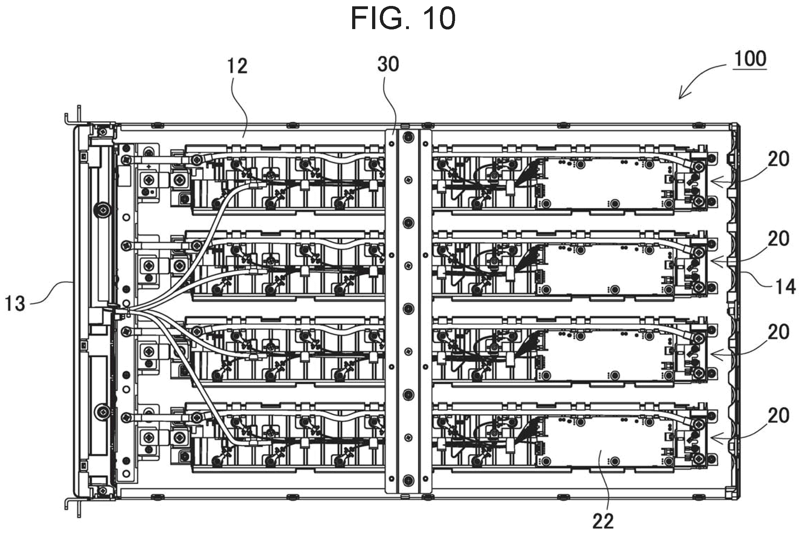

FIGS. 1-10 illustrate power supply device 100 according to Exemplary Embodiment 1 of the present disclosure. FIG. 1 is a perspective view of power supply device 100 according to Embodiment 1. FIG. 2 is an exploded perspective view of the device shown in FIG. 1 for illustrating a state that upper case 11 is removed from the device. FIG. 3 is an exploded view of the device shown in FIG. 2 for illustrating a state that an end plate is removed from the device. FIG. 4 is an exploded perspective view of the device shown in FIG. 3 for illustrating a state that first fixing part 30 is removed from the device. FIG. 5 is an exploded perspective view of the device shown in FIG. 4 for illustrating a state that second fixing part 40 and battery block 20 on a front side are removed from the device. FIG. 6 is an exploded perspective view of power supply device 100 shown in FIG. 1 viewed diagonally from below. FIG. 7 is an enlarged horizontal-sectional view of a key part of the device along line VII-VII shown in FIG. 1. FIG. 8 is an enlarged vertical-sectional view of a key partaken of the device line VIII-VIII shown in FIG. 1. FIG. 9 is an enlarged vertical-sectional view of a key part of the device along line IX-IX shown in FIG. 1. FIG. 10 is a sectional view of the device along line X-X shown in FIG. 1. Power supply device 100 illustrated in the drawings includes outer case 10 and battery assembly 2.

### Outer Case 10

Outer case 10 accommodates battery assembly 2 therein. Outer case 10 may have any shape having an accommodating space inside. In an example shown in FIG. 1, outer case 10 has a thin box shape extending in a direction and having a height shorter than a width thereof.

Outer case 10 includes upper case 11, lower case 12, and an end plate. The end plate closes at least one surface of a pair of end surfaces surrounded by lower case 12 and upper case 11. In an example illustrated in FIGS. 2, 3, and 10, front covers 13 and 14 are used as end plates. Outer case 10 is made of metal material, such as aluminum or its alloy, having high strength and heat dissipation properties. Alternatively, outer case 10 may be made of resin material, such as polycarbonate or PC-ABS alloy, having high insulation properties. Terminals are provided on front cover 13 for external connection. Front cover 13 and rear cover 14 may have vents therein so as to draw cool air to cool inside outer case 10.

Components of outer case 10 are not limited to the example in the drawings, and outer case 10 may be divided into three pieces or less or five pieces or more. For example, front cover 13 and rear cover 14 may be formed unitarily with upper case 11 and lower case 12. The shape and size of outer case 10 are not limited to the example in the drawings, and any shape including a cubic shape and an elongated rectangular columnar shape may be adopted as appropriate.

As illustrated in FIGS. 2, 3, and 10, an internal space accommodating battery assembly 2 therein is provided in outer case 10. Battery assembly 2 includes battery blocks 20. Battery blocks 20 are arranged side by side. In the example illustrated in FIGS. 4-6 and 10, battery assembly 2 includes four battery blocks 20. The number of the battery blocks and their arrangement are not limited to the example illustrated. Any arrangement is applicable, including arrangement of the battery blocks in a longitudinal direction of the battery block. Other battery blocks may be stacked in a vertical direction perpendicular to a direction battery blocks 20 are arranged side by side in a row.

Each of battery blocks 20 includes secondary battery cells 1. Secondary battery cells 1 are connected in series and parallel to one another with lead plates. The number of series connections and parallel connections of the cells may be determined arbitrarily depending on required specifications. Each battery block 20 includes secondary battery cells 1. For example, battery block 20 includes a battery holder accommodating secondary battery cells 1 therein. Each battery holder 21 includes accommodation tubes each accommodating a corresponding secondary battery cell 1. For example, each battery holder 21 is vertically divided into half, and secondary battery cell 1 is accommodated such that an accommodation tube divided into two pieces holds secondary battery cell 1 from the top and bottom of the cell. Battery holder 21 may be made of resin, such as polycarbonate, with high insulation properties. Each battery block may include circuit board 22 as required. A charge-discharge circuit for charging and discharging secondary battery cells 1, a protection circuit for monitoring voltage and temperature of secondary battery cells 1 to block a current at the time of abnormality, and the like are mounted on circuit board 22. Circuit board 22 is made of, e.g., glass epoxy. A board holder for holding circuit board 22 may be provided.

### Secondary Battery Cell 1

Secondary battery cell 1 may be a secondary battery cell having a cylindrical or rectangular outer shape. In an example illustrated in FIGS. 7 and 8, cylindrical secondary battery cells 1 are arranged in a staggered pattern in a vertical orientation. However, the number of secondary battery cells 1 and their arrangement are not limited to the example. Any number or arrangement of secondary battery cells 1 is applicable as appropriate. For example, cylindrical secondary battery cells may be arranged in matrix.

Each secondary battery cell 1 includes positive and negative electrodes. The positive and negative electrodes are preferably provided on one end surface of secondary battery cell 1. As secondary battery cell 1, known secondary batteries including a lithium ion secondary battery, a nickel hydride battery, and a nickel cadmium battery are applicable as appropriate.

### Fixture 3

Battery blocks 20 are fixed to outer case 10 with fixtures 3. Fixture 3 includes first fixing part 30 and second fixing parts 40. First fixing part 30 is disposed at the middle of battery assembly 2 including battery blocks 20 arranged side by side and over adjacent battery blocks 20. First fixing part 30 is a common component fixing second fixing parts 40. Second fixing part 40 is a metal fixing bracket for fixing each battery block 20. More specifically, a portion of second fixing part 40 is fixed to first fixing part 30, and another portion of second fixing part 40 is fixed to outer case 10. Each second fixing part 40 holds battery block 20 by pressing battery block 20 against outer case 10. In this structure, as illustrated in, e.g., FIG. 5, fixture 3 for fixing battery assembly 2 to outer case 10 is divided into first fixing part 30 disposed across battery blocks 20 and second fixing parts 40 each fixing corresponding battery block 20 by pressing battery block 20. Therefore, battery blocks 20 with various shapes can be fixed to common outer case 10 by preparing second fixing part 40 according to the outer shape of battery block 20.

Battery blocks often have different outer shapes depending on the purpose of use and model. In this case, a dedicated fixture fixing the battery block to the outer case needs to be designed according to the shape of battery block. In contrast, in power supply device 100 according to Embodiment 1, fixture 3 is divided into first fixing part 30 and second fixing parts 40, and only second fixing parts 40 is designed according to the shape of battery block 20 to be fixed. Thus, battery block 20 can be fixed to outer case 10 using common first fixing part 30.

### First Fixing Part 30

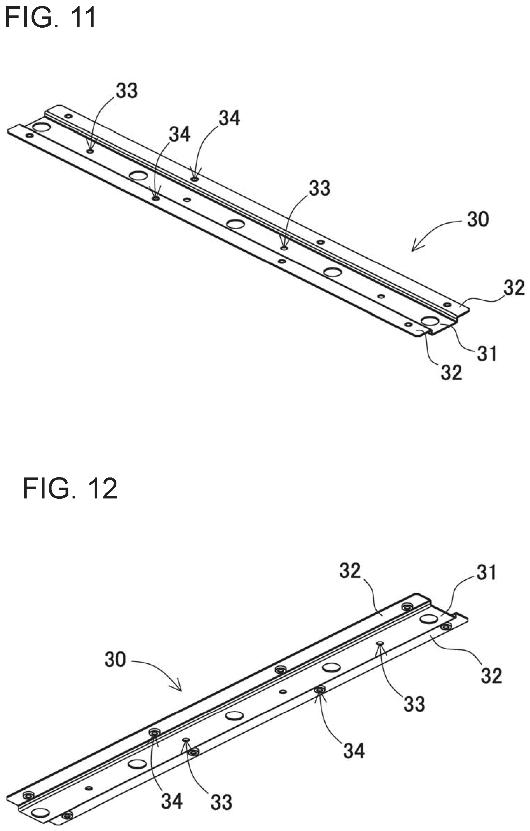

FIGS. 11 and 12 are perspective views of first fixing part 30 As illustrated in these figures, first fixing part 30 is a metal plate extending elongatedly in one direction, and has second fixing holes 33 therein apart from one another for fixing second fixing parts 40. First fixing part 30 is preferably formed by bending a metal plate to have a downwardly convex shape to increase its strength. In first fixing part 30 with a cross section having a recessed shape, second fixing holes 33 are formed in recess 31 in the middle. On the other hand, first fixing-part fixing holes 34 used for fixing to upper case 11 are formed in both ends 32 formed on both sides of recess 31. First fixing part 30 is made of material with high strength including metal, such as SUS and SGCC, or resin, such as polycarbonate.

### Second Fixing Part 40

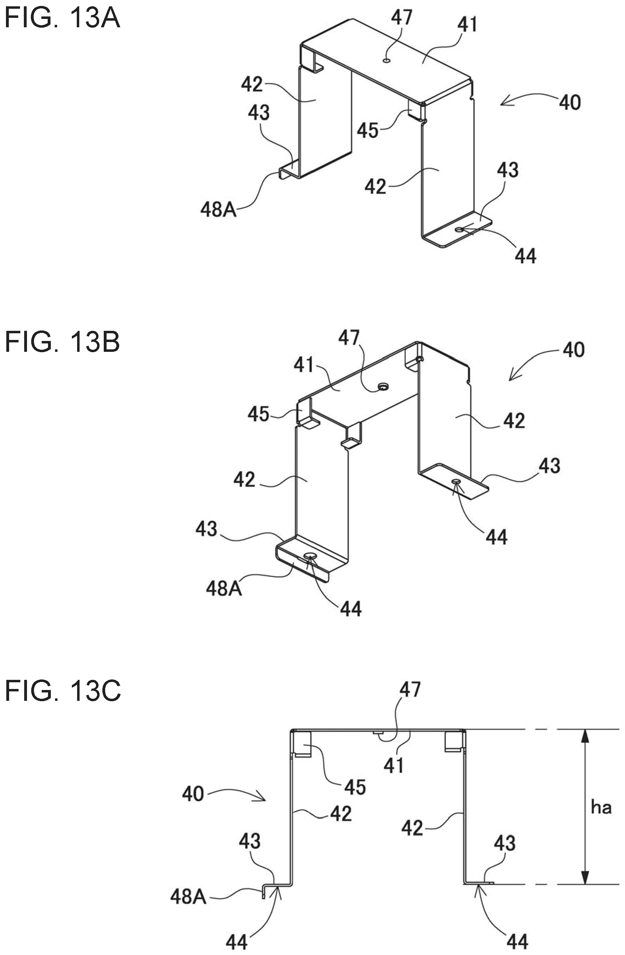

Second fixing part 40, as illustrated in FIGS. 13A-13C, has a cross section with a square U-shape, and includes first surface 41, a pair of second surfaces 42, and a pair of third surfaces 43. First surface 41 has first fixing hole 47 therein fixed to first fixing part 30. Second surfaces 42 extend bendingly from both sides of first surface 41, respectively. The height of second surface 42, i.e., the height ha of second fixing part 40, is designed to be substantially the same height as battery block 20 to be fixed. Third surfaces 43 extend bendingly from respective sides of second surfaces 42 opposite to first surface 41. Each third surface 43 has third-surface fixing hole 44 therein that fixes second fixing part 40 to outer case 10. Lower case 12 of outer case 10 has case-fixing hole 15 to be fixed with third-surface fixing hole 44. In the example in, e.g., FIG. 7, case-fixing hole 15 is a boss hole.

As illustrated in, e.g., FIG. 7, second fixing part 40 is fixed to outer case 10 by screwing third-surface fixing hole 44 of third surface 43 and case-fixing hole 15 together while first surface 41 and the pair of second surfaces 42 cover each battery block 20. Here, second fixing part 40 is fixed such that first surface 41 presses the top surface of battery block 20. In other words, second fixing part 40 and battery block 20 are not screwed together. Battery block 20 is fixed by frictional force caused by the pressing. In this state, first surface 41 is fixed to first fixing part 30, so that second fixing part 40 is fixed at a predetermined position without any positional deviation in the longitudinal direction of battery block 20. In this structure, each battery block 20 can be pressed against outer case 10 and fixed to outer case 10 while second fixing part 40 covers each battery block 20. When battery block 20 is disassembled from outer case 10, particular battery block 20 can be disassembled without disassembling entire battery assembly 2 by disassembling only applicable second fixing part 40 and leaving other second fixing parts 40 as they are.

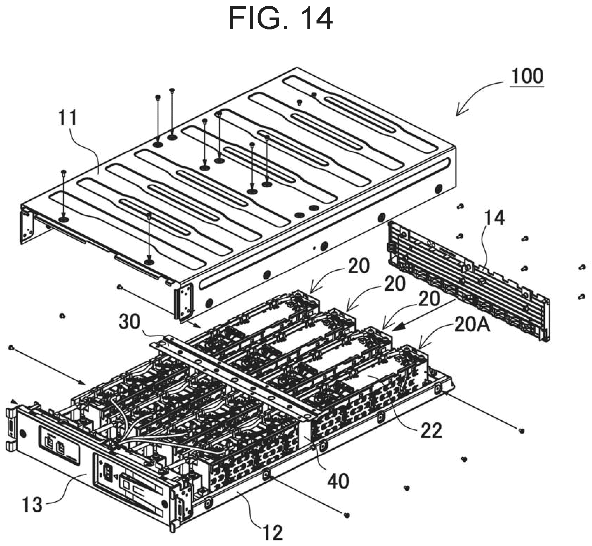

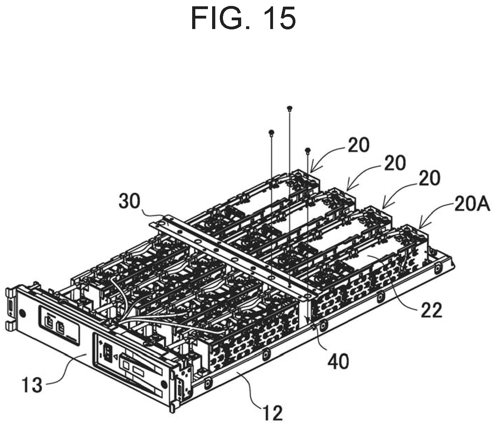

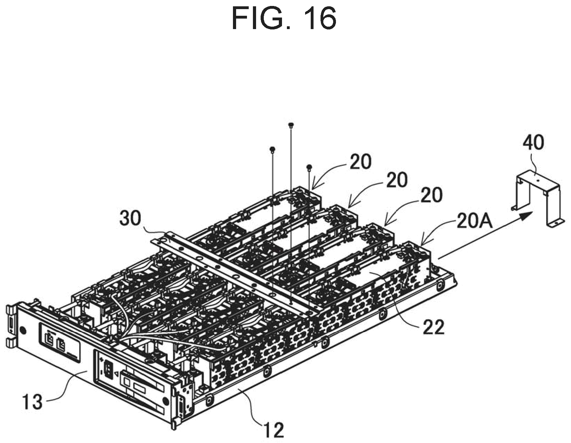

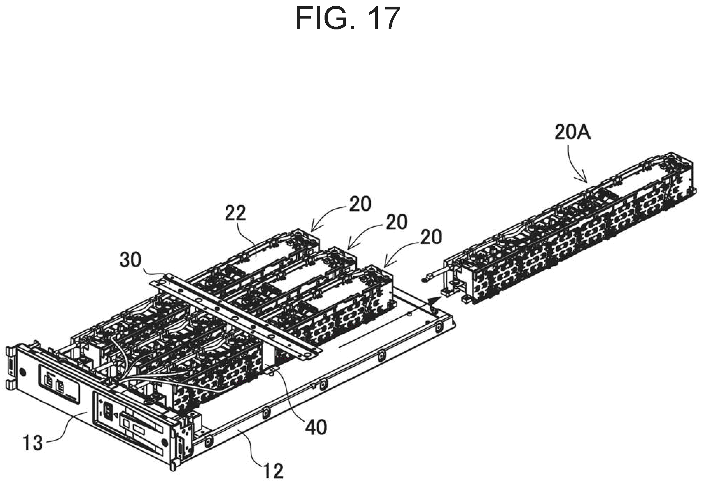

This structure facilitates replacement and maintenance of particular battery block 20. For example, when only some of battery blocks deteriorate due to a long period of use of the power supply device and need to be replaced, only a required battery block can be removed and replaced without disassembling all battery blocks. For example, FIGS. 14-17 illustrate a procedure for replacing only battery block 20A on the front side. First, as illustrated in FIG. 14, upper case 11 of outer case 10 and rear cover 14 are removed. Next, as illustrated in FIG. 15, wire harnesses of battery block 20A on the front side are removed, and then, second fixing part 40 fixing battery block 20A on the front side and first fixing part 30 are unscrewed to separate second fixing part 40 and first fixing part 30. Then, as illustrated in FIG. 16, second fixing part 40 is slid and removed from the side of rear cover 14. Further, as illustrated in FIG. 17, battery block 20A is slid and removed from the side of rear cover 14. Note that, depending on the connection state, second fixing part 40 and battery block 20A may be simultaneously slid and removed from the side of rear cover 14.

Conventionally, a fixture fixing the battery blocks to the outer case is unitarily provided, and thus the entire fixture needs to be removed even for disassembling only some of the battery blocks. However, according to the embodiment, fixture 3 is divided into first fixing part 30 and second fixing parts 40. Thus, only particular second fixing part 40 can be disassembled to remove required battery block 20A while first fixing part 30 and other battery blocks 20 are continuously fixed. As a result, workability at the time of replacement or maintenance of some of the battery blocks will be significantly improved.

Still more, first fixing part 30 and second fixing parts 40 constituting fixture 3 do not have a structure fixed directly to battery blocks 20. Fixture 3 presses battery block 20 to fix but has no structure to fix fixture 3 directly to battery block 20. This configuration allows battery blocks with different shapes to be fixed, thereby offering a structure convenient for reusing the battery blocks. When battery blocks 20 are disassembled, work for releasing the fixed state of battery blocks 20 and fixture 3 can be reduced. In the example illustrated in FIGS. 7, 8, and 9, first fixing part 30 is fixed to upper case 11, and second fixing parts 40 are fixed to lower case 12. This configuration avoids positional deviation of fixture 3.

In the above example, front cover 13 is fixed and rear cover 14 is removed to pull out second fixing part 40 and battery block 20 from the side of rear cover 14. However, the present disclosure is not limited to this structure. For example, front cover 13 may be removed to pull out second fixing part 40 and battery block 20 from front cover 13.

Still more, when the wire harnesses are removed from battery block 20 in FIG. 15, electrical connection of each battery block 20 is preferably performed on each battery block 20 so that only wiring of applicable battery block 20 can be disconnected without affecting wiring of other battery blocks as much as possible. In an example illustrated in FIG. 10, a power line and a bus bar of each battery block 20 are connected independently in the longitudinal direction of each battery block 20. In this structure, work, such as wire harness removal or connector disconnection, can be performed on each battery block 20. As a result, the battery block can be replaced without affecting other battery blocks as much as possible.

In the above-described example, one fixture 3 is provided at the middle of battery blocks 20 in the longitudinal direction of the blocks. However, two or more fixtures may be arranged in the longitudinal direction of the battery blocks. In particular, a long battery block can be stably fixed by fixing the battery block at two or more positions apart from one another. The battery block may include sub-blocks connected in the longitudinal direction. In this case, the sub-blocks may not be fixed at the middle of each sub-block in the longitudinal direction by the fixture. Depending on the length or number of sub-blocks, an end of the sub-block may be fixed with the fixture. The middle of the battery block described as a fixing position of the battery block by the fixture is not limited to the center of the battery block in the longitudinal direction of the battery block, and changes depending on the structure of battery blocks. The middle of the battery block refers to a stable fixing position.

In second fixing part 40, rib 45 may be provided, as necessary, at an interface between first surface 41 and second surface 42, or at an interface between second surface 42 and third surface 43. Rib 45 provides a surface pressing battery block 20. Rib 45 reinforces the interface. Rib 45 restricts an installation direction, thus being used for positioning. In an example illustrated in FIGS. 13A-13C, a part of second surface 42 is partially bent to form rib 45 at the interface between first surface 41 and second surface 42.

The shape of the rib is not limited to the example illustrated in FIGS. 13A-13C, and other shapes that can reinforce the second fixing part are applicable as appropriate. The rib is not limited to one position, and ribs may be provided at two or more positions. In the example illustrated in FIGS. 13A-13C described above, second rib 48A is provided on third surface 43. Second rib 48A reinforces third surface 43, and can also be used for restricting the installation direction or positioning. In this example, second rib 48A is provided only on third surface 43 on the left side of the pair of third surfaces 43 in the drawings. However, the present disclosure is not limited to this structure.

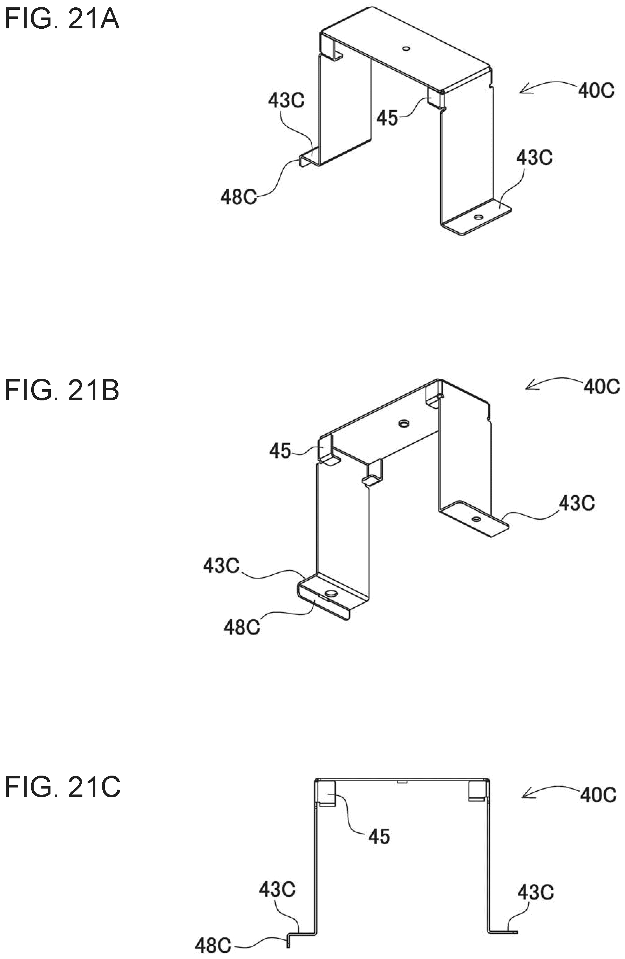

For example, FIGS. 21A-21C illustrate an example of a second fixing part of a power supply device according to Modification 1. In the drawings, components identical to those of the above embodiment are denoted by the same reference numerals and their detailed description will be omitted as appropriate. Second fixing part 40C illustrated in the drawings includes second rib 48C on third surface 43C on the right side. The second rib may be provided on both sides of the third surface.

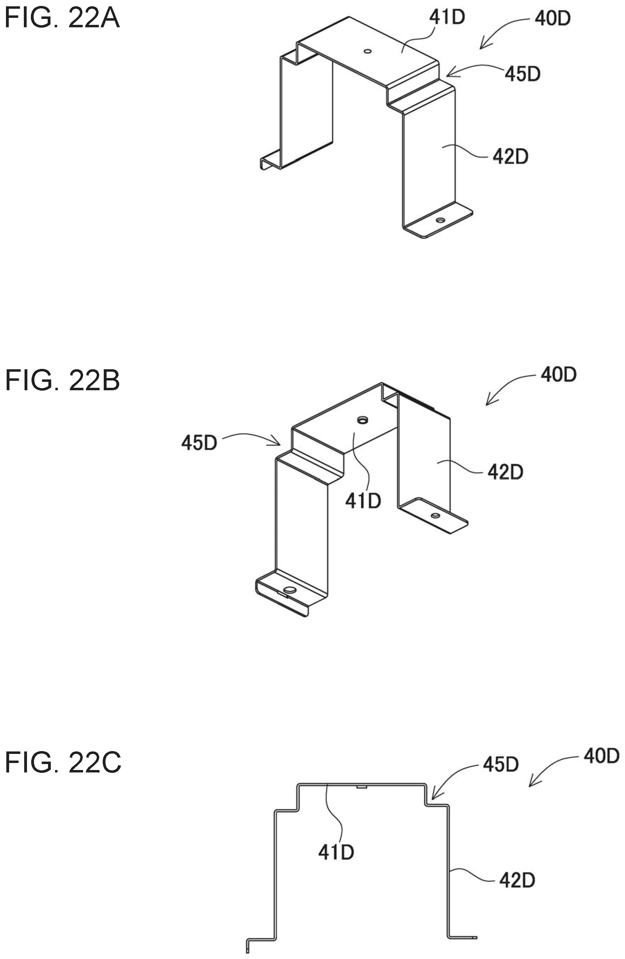

As another example, FIGS. 22A-22C illustrate an example of a second fixing part of a power supply device according to Modification 2. Also in these drawings, components identical to those of the above embodiment or Modification 1 are denoted by the same reference numerals, and their detailed description will be omitted as appropriate. In second fixing part 40C illustrated in the drawings, rib 45D provided at an interface between first surface 41D and second surface 42D is bent stepwise in a direction opposite to the joining direction of first surface 41D and second surface 42D. This structure enhances the strength at the interface between first surface 41D and second surface 42D.

In order to fix each second fixing part 40 to lower case 12, a common screw hole may be used for adjacent battery blocks 20. In the example shown in, e.g., FIG. 7, one third-surface fixing hole 44 of one second fixing part 40 fixing one battery block 20 and another third-surface fixing hole 44 of another second fixing part 40 fixing another battery block 20 adjacent to the one battery block 20 face each other, overlap each other, and are fixed to one of the case-fixing holes. In this structure, third surfaces 43 overlap each other and screwed to common case-fixing hole 15. The fastening work of adjacent battery blocks 20 is shared for labor saving.

First fixing part 30 is preferably fixed to upper case 11. In the example shown in FIGS. 6, 11, and 12, first fixing part 30 has first fixing-part fixing hole 34 therein to be fixed to upper case 11. First fixing-part fixing hole 34 is provided in each of the pair of ends 32 formed in the longitudinal direction of first fixing part 30. On the other hand, upper case 11 has upper case-fixing hole 16 to be fixed to first fixing-part fixing hole 34. As illustrated in FIGS. 6 and 8, upper case-fixing hole 16 and first fixing-part fixing hole 34 of first fixing part 30 are aligned and fixed by screwing together.

### Exemplary Embodiment 2

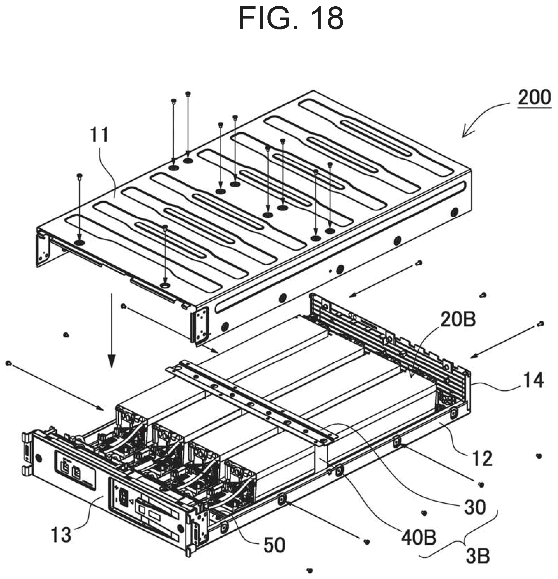

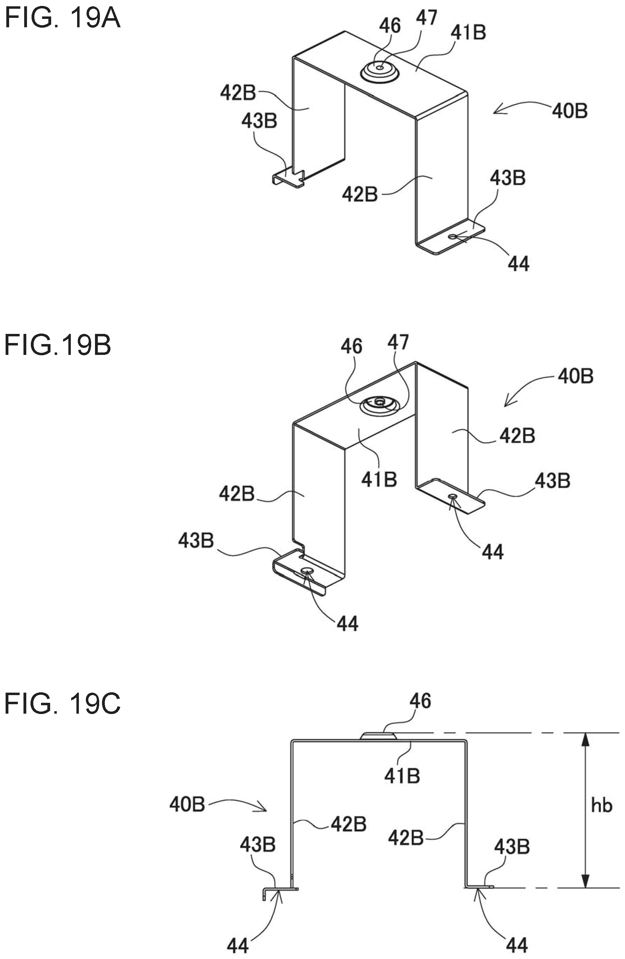

As described above, the second fixing part constituting the fixture may have different shapes according to specifications of the battery block. As an example, FIGS. 18 and 19A-19C illustrate fixture 3B of power supply device 200 according to Exemplary Embodiment 2. FIG. 18 is an exploded perspective view of power supply device 200 according to Embodiment 2. FIG. 19A is a perspective view of second fixing part 40B shown in FIG. 18. FIG. 19B is a perspective view of second fixing part 40B viewed diagonally from below. FIG. 19C is a sectional view of second fixing part 40B. In the drawings, components identical to those of the Embodiment 1 are denoted by the same reference numerals and their detailed description will be omitted as appropriate. In particular, outer case 10 and first fixing part 30 are common to those of Embodiment 1. However, battery block 20B shown in FIG. 18 has a slightly shorter height than battery block 20 of the power supply device according to Embodiment 1 illustrated in, e.g., FIG. 3. Therefore, second fixing part 40B illustrated in FIGS. 13A to 13C cannot fix the battery block appropriately. Thus, as a dedicated second fixing part, second fixing part 40B illustrated in FIGS. 19A-19C is used instead of the second fixing part shown in FIGS. 13A-13C.

### Protrusion 46

Second fixing part 40B illustrated in FIGS. 19A-19C includes first surface 41B, second surface 42B, and third surface 43B, and has a cross section with a squared U-shape as well. The height of second surface 42B is designed to provide almost equivalent height as the height of battery block 20B to be fixed, as illustrated in FIG. 18. Thus, third-surface fixing hole 44 of third surface 43B and case-fixing hole 15 of lower case 12 can be screwed together to press and fix battery block 20B by first surface 41B.

Second fixing part 40B includes protrusion 46 protruding stepwise on first surface 41B. Protrusion 46 has third-surface fixing hole 44 therein as a screw hole for screwing with first fixing part 30. As illustrated in FIG. 19C, the height from protrusion 46 to third surface 43B, i.e., height hb of second fixing part 40B, is same as height ha of second fixing part 40 of power supply device 100 according to Embodiment 1. In this structure, battery block 20B with different sizes can be appropriately fixed while using outer case 10 and first fixing part 30 of power supply device 100 according to Embodiment 1. In other words, the height of protrusion 46 is changed according to the height of the battery block to be fixed so as to absorb a difference in the height of battery blocks and use common outer case and first fixing part for fixing the battery blocks.

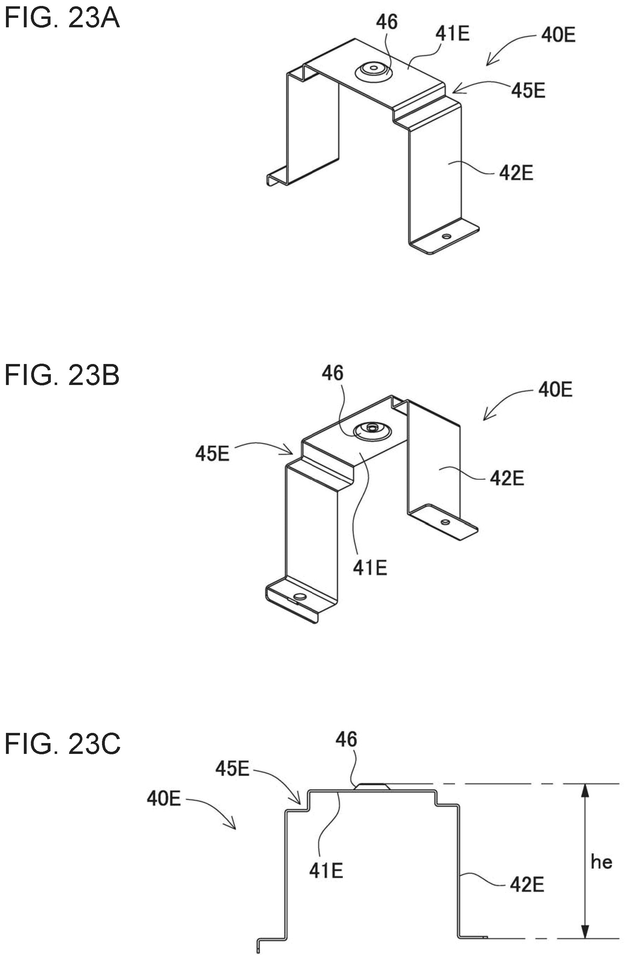

Sill more, the shape of the rib may be changed as appropriate also in second fixing part 40B. FIGS. 23A-23C illustrate an example of a second fixing part of a power supply device according to Modification 3. Also in these drawings, components identical to those of the above embodiments and modifications are denoted by the same reference numerals and their detailed description will be omitted as appropriate. Second fixing part 40E illustrated in the drawings is bent in a direction opposite to the joining direction of first surface 41E and second surface 42E to form stepped rib 45E, similar to Modification 2. This structure enhances the strength of an interface between first surface 41E and second surface 42E. Still more, height he of second fixing part 40E may be changed by adjusting the height of step formed by rib 45. In this case, the height of the second fixing part can be adjusted by rib 45 instead of the protrusion, and the protrusion may be omitted as illustrated in FIGS. 22A-22C.

As described above, the battery blocks with different specifications are supported by changing only the second fixing part smaller than the fixture without preparing a dedicated fixture for each battery block. This configuration allows for the use of common components, and allows battery blocks with different specifications to be used at low cost. In particular, the structure according to the present disclosure is effective for the reuse of battery blocks. From the recent perspective of SDGs, an effective use of reusable parts and materials is given importance, and there is a particularly high demand for the reuse in the field of batteries because resources for batteries are limited. It is conceivable that a secondary battery cell that has reached its life end in one application may still be usable in another application. For example, most of backup power supplies for servers complete their specified service life without being actually used. These power supply devices are often usable in other applications. To reuse these batteries for other purposes, it is conceivable that these batteries are placed in outer case 10 with a different shape from original outer case 10, depending on the shape required in a target application. In this case, it is normally necessary to design a dedicated fixture every time. However, according to the exemplary embodiment, the fixture is divided into two or more pieces, and only one of the divided pieces need to be replaced to support the reuse. Therefore, the present embodiment provide a benefit of changing the power supply device to reusable specifications at low cost. In addition, as described above, a replacement work of some of battery blocks is easy and maintenance workability will also improve.

### Trays 50

Each battery lock 20 may also have a structure of directly fixing each battery block 20 to outer case 10 by screwing, in addition to the structure of fixing battery block 20 to outer case 10 by fixture 3. For example, each of battery blocks 20 may be fixed to a corresponding one of trays 50, and trays 50 may be fixed to the lower case by screwing together using screw holes provided at respective both ends of trays 50.

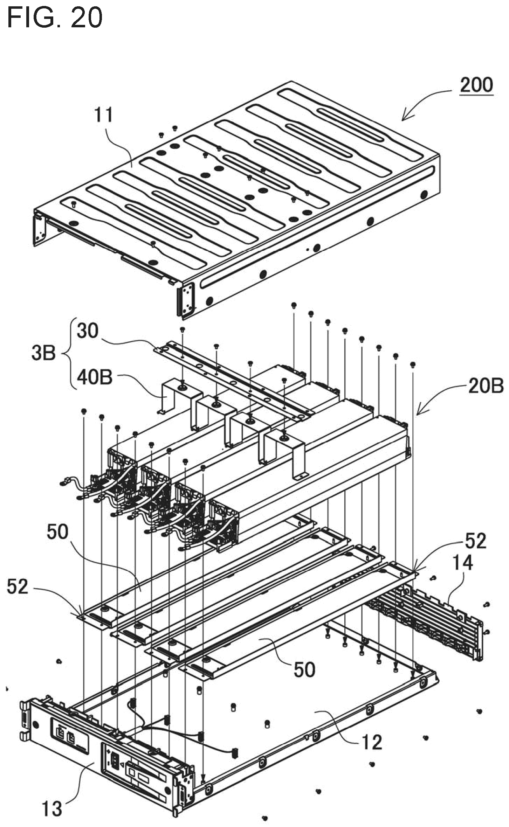

For example, in power supply device 200 illustrated in FIG. 20, tray 50 is provided between lower case 12 and each of battery blocks 20. Each tray 50 has tray-fixing holes 52 that are fixed to outer case 10 at least at both ends of the tray in the longitudinal direction. This configuration allows battery block 20 to be fixed to outer case 10 via the tray without a hole formed in battery block 20 to fix battery block 20 to outer case 10. Still more, individual placement of battery block 20 on the tray facilitates sliding battery block 20 to pull out battery block 20 from outer case 10 by flattening an interface between the tray and outer case 10. Still more, a common outer case can be used, and the flexibility in an arrangement orientation of the battery block can be increased. When determining an axis rotation direction for deciding which surface of the battery block to face the top and bottom of the outer case, the battery block may not be placed in a direction with a hole for fixing the battery block to the outer case, although provided, due to positions of a circuit board and a wire harness. Even in this case, the tray may be fixed to the outer case regardless of a rotating position or orientation of the battery block.

In the above example, the power supply device is mounted on an electric apparatus to be driven to supply power to the electric apparatus. When a remaining capacity of the power supply device becomes less or the power supply device is deteriorated over time, the power supply device can be replaced to continue to use the electric apparatus. However, the present disclosure is not limited to a replaceable power supply device that mainly accommodates secondary battery cells, and is also applicable to an electric apparatus housing secondary battery cells in its casing. The power supply device in the present disclosure is a device housing secondary battery cells inside a case, and includes an electric apparatus with built-in secondary battery cells for driving in its casing. In other words, the present disclosure is not limited to replaceable power supply devices, and is also applicable to electric apparatuses with built-in secondary battery cells.

### INDUSTRIAL APPLICABILITY

A power supply device according to the present disclosure is suitably used as a backup power supply for servers and a power supply device for home-use, office-use, and factory-use in stationary power storage applications, a drive power supply for mobile objects including electric carts, electric scooters, and power-assisted bicycles, a power supply for portable electric apparatuses including radio devices, electric cleaners and electric tools, and a drive power supply for vehicles including hybrid vehicles and electric vehicles.

### REFERENCE MARKS IN THE DRAWINGS

100, 200 power supply device
1 secondary battery cell
2 battery assembly
3, 3B fixture
10 outer case
11 upper case
12 lower case
13 front cover
14 rear cover
15 case-fixing hole
16 upper case-fixing hole
20, 20A, 20B battery block
21 battery holder
22 circuit board
30 first fixing part
31 recess
32 end
33 second fixing hole
34 first fixing-part fixing hole
40, 40B, 40C, 40D, 40E second fixing part
41, 41B, 41D, 41E first surface
42, 42B, 42D, 42E second surface
43, 43B, 43C third surface
44 third-surface fixing hole
45, 45D rib
46 protrusion
47 first fixing hole
48A, 48C second rib
50 tray
52 tray-fixing hole
ha, hb height of second fixing part

## Claims

1. A power supply device comprising:
a plurality of battery blocks, each of the plurality of battery blocks including a plurality of secondary battery cells;
an outer case accommodating the plurality of battery blocks therein such that the plurality of battery blocks are arranged side by side; and
a fixture fixing the plurality of battery blocks to the outer case, wherein
the plurality of battery blocks arranged side by side constitute a battery assembly, and
the fixture includes:
a first fixing part disposed at a middle of the battery assembly and over adjacent battery blocks among the plurality of battery blocks; and
a plurality of second fixing parts, each of the plurality of second fixing parts pressing a corresponding one the plurality of battery blocks against the outer case to hold the plurality of battery blocks, the each of the plurality of second fixing parts including a portion fixed to the first fixing part and another portion fixed to the outer case.

2. The power supply device according to claim 1, wherein
the each of the plurality of second fixing parts has a cross section with a squared U-shape, the each of the plurality of second fixing parts including:
a first surface;
a pair of second surfaces extending bendingly from both sides of the first surface; and
a pair of third surfaces extending bendingly from respective sides of the pair of second surfaces opposite to the first surface,
the first surface of the each of the plurality of second fixing parts is fixed to the first fixing part, and
the pair of third surfaces of the each of the plurality of second fixing parts are fixed to the outer case such that the first surface and the pair of second surfaces of the each of the plurality of second fixing parts cover the each of the plurality of battery blocks.

3. The power supply device according to claim 2, wherein
the outer case includes:
a lower case;
an upper case closing an upper surface of the lower case; and
an end plate closing at least one of a pair of end surfaces of the outer case surrounded by the lower case and the upper case,
the first fixing part is fixed to the upper case, and
the plurality of second fixing parts are fixed to the lower case.

4. The power supply device according to claim 2, wherein
the third surfaces of the each of the plurality of second fixing parts have third-surface fixing holes opening therein, respectively,
the outer case has case-fixing holes formed therein for fixing the third-surface fixing holes of the each of the pair of third surfaces, and
one third-surface fixing hole of one second fixing part fixing one battery block and another third-surface fixing hole of another second fixing part fixing another battery block adjacent to the one battery block face each other, overlap each other, and are fixed to one of the case-fixing holes.

5. The power supply device according to claim 2, wherein
the each of the plurality of second fixing parts includes a protrusion protruding raised stepwise on the first surface, and
the protrusion has a third-surface fixing hole therein screwed with the first fixing part.

6. The power supply device according to claim 1, further comprising:
a tray provided opposite to a side where the first fixing part and between the each of the plurality of battery blocks and the outer case, wherein
the tray has tray-fixing holes provided therein at least at both ends of the tray in a longitudinal direction so as to fix the tray to the outer case.

7. The power supply device according to any one of claims 1 to 6, wherein the first fixing part and the plurality of second fixing parts do not have a structure fixed directly to any one of the plurality of battery blocks.

8. The power supply device according to any one of claims 1 to 6, wherein the plurality of battery blocks are recycled battery blocks.
